# EUROPÄISCHE PATENTANMELDUNG

(11) **EP 1 967 925 A1**
(43) Veröffentlichungstag der Anmeldung: **10.09.2008**
(21) Anmeldenummer: 07103604.0
(22) Anmeldetag: 06.03.2007
(51) Int. Cl.: G05B 19/401

(54) **Speicher**

(71) Anmelder: Interglass Technology AG, 6330 Cham (CH)
(72) Erfinder: Arnet, Roman, 6373 Ennetbürgen (CH); Gautschi, Rudolf, 6005 Luzern (CH)
(74) Vertreter: Falk, Urs

(57) **Zusammenfassung**

Ein Speicher für Objekte umfasst ein Profilgestell (1) mit mehreren Blechen (2), einen Roboter (4) mit einem Greifer (5), Mittel für die Bestimmung der Lage jedes Blechs (2) in Bezug auf ein durch den Roboter definiertes Koordinatensystem. Jedes Blech enthält einen durch Biegen gebildeten Profilrahmen (28), eine Vielzahl von auf dem Boden angebrachten Noppen (21) sowie eine erste Markierung (22) und zweite Markierungen (23-26). Die Noppen begrenzen Speicherplätze für die Aufnahme je eines Objekts. Auf dem Blech sind mittels der zweiten Markierungen Eichkörper angeordnet. Die erste Markierung und die Eichkörper dienen für die Bestimmung der Lage des Blechs. Der Roboter weist eine horizontale und eine vertikale lineare Bewegungsachse (8, 9) und eine rotative Bewegungsachse (10) auf.

## Beschreibung

Die Erfindung betrifft einen Speicher für die Lagerung von Objekten.

Ein solcher Speicher eignet sich beispielsweise für die Lagerung von Formschalen, die für die Herstellung von optischen Linsen verwendet werden. Bei diesem Herstellungsverfahren wird ein Monomer in eine durch zwei Formschalen und eine Dichtung begrenzte Kavität gegossen und anschliessend polymerisiert, wobei die Linse entsteht. Aus der internationalen Patentanmeldung WO 00/56528 ist eine Fertigungslinie für die vollautomatische Herstellung von Linsen bekannt. Die Fertigungslinie enthält einen Speicher für die Formschalen, nähere Angaben zum Speicher fehlen jedoch.

Aus der JP 5338713 ist ein Speicher mit einer in zwei Richtungen beweglichen Roboterhand bekannt. Der Speicher enthält optische Markierungen und Sensoren, um die Lage der optischen Markierungen zu messen.

Der Erfindung liegt die Aufgabe zugrunde, einen kompakten Speicher zu entwickeln.

Die genannte Aufgabe wird erfindungsgemäss gelöst durch die Merkmale des Anspruchs 1. Vorteilhafte Ausgestaltungen ergeben sich aus den abhängigen Ansprüchen.

Der Speicher ist beispielsweise Teil einer Fertigungslinie und dient einerseits für die Lagerung von Objekten und andererseits für den schnellen rezeptgestützten Zugriff auf die Objekte. Solche Objekte sind beispielsweise die oben genannten Formschalen. Der erfindungsgemässe Speicher umfasst ein in einem Gehäuse angeordnetes Profilgestell mit mehreren übereinander angeordneten Blechen für die Speicherung der Formschalen. Jedes Blech enthält einen durch Biegen gebildeten, als Profilrahmen ausgebildeten Rand, vom Boden des Blechs hervorstehende Noppen sowie mehrere Markierungen. Die Noppen definieren und begrenzen die Speicherplätze für die Objekte. Der Speicher umfasst weiter einen Roboter mit einem Greifer. Der Roboter besitzt zwei translatorische und einen rotativen Freiheitsgrad. Er besteht aus zwei linearen Bewegungsachsen, die die Verschiebung einer Plattform in einer horizontalen Richtung und der vertikalen Richtung ermöglichen, und einen um eine vertikale Achse drehbaren Schwenkarm mit einem Greifer, der auf der Plattform gelagert ist. Der Speicher umfasst fakultativ ein Erkennungssystem für die Identifizierung der Objekte und, ebenfalls fakultativ, ein Filtersystem, das die zwischen den Blechen bestehenden Zwischenräume mit gefilterter Luft und Überdruck versorgt.

Der Greifer enthält beispielsweise zwei in horizontaler Richtung bezüglich einer Greifachse auslenkbare Klemmbacken mit vier Bolzen, zwischen denen das Objekt eingeklemmt wird. Um das Objekt auf einem Speicherplatz abzulegen, wird der Greifer in eine Position oberhalb des Speicherplatzes gebracht, in der seine Greifachse das Zentrum des Speicherplatzes schneidet, und dann abgesenkt, bis sich die Bolzen in einem vorbestimmten Abstand oberhalb des Bodens des Blechs befinden. Dann werden die Klemmbacken geöffnet. Um das Objekt von einem Speicherplatz zu entnehmen, wird der Greifer mit geöffneten Klemmbacken in eine Position oberhalb des Speicherplatzes gebracht, in der seine Greifachse das Zentrum des Speicherplatzes schneidet, und dann abgesenkt, bis sich die Bolzen im vorbestimmten Abstand oberhalb des Bodens des Blechs befinden. Dann werden die Klemmbacken geschlossen.

Für die Charakterisierung der Lage der Speicherplätze eignet sich ein kartesisches Koordinatensystem mit den horizontalen Koordinatenachsen x und y und der vertikalen Koordinatenachse z am besten, da die Bleche rechteckförmig sind und jedes Blech auf einer vorbestimmten z-Höhe im Profilgestell angeordnet ist. Jeder Speicherplatz ist definiert durch die Angabe eines Koordinatenpaars (x, y), das die Lage des Zentrums des Speicherplatzes in der horizontalen xy-Ebene charakterisiert, und die z-Höhe des Bodens des zugehörigen Blechs.

Die Position der Plattform und somit auch die Position der Drehachse des Greifers in der vertikalen xz-Ebene ist definiert durch die x-Position der horizontalen Bewegungsachse und die z-Position der vertikalen Bewegungsachse. Da für das Ablegen oder Entnehmen eines Objekts die Greifachse des Greifers das Zentrum des entsprechenden Speicherplatzes schneiden muss, ist es zweckmässig, die horizontale Lage der Greifachse des Greifers ebenfalls durch kartesische Koordinaten zu beschreiben. Die Lage der Greifachse des Greifers in der xy-Ebene ergibt sich mittels einfacher trigonometrischer Berechnungen aus der x-Position der Drehachse, dem Drehwinkel 6 der rotativen Bewegungsachse und dem Abstand zwischen der Drehachse und der Greifachse. Somit können umgekehrt die anzufahrende x-Position der horizontalen Bewegungsachse und der anzufahrende Drehwinkel θ der rotativen Bewegungsachse aus dem Koordinatenpaar (x, y) des anzufahrenden Speicherplatzes, das der anzufahrenden xy-Position der Greifachse entspricht, berechnet werden. Die horizontale und die rotative Bewegungsachse definieren somit ein globales xy-Koordinatensystem.

Die Bleche sind alle gleichartig, aber infolge unvermeidlicher Herstellungstoleranzen ist es erforderlich, in einem Kalibrierungsschritt für jedes Blech eine Beziehung zwischen den Koordinaten der Speicherplätze und den drei Bewegungsachsen des Roboters herzustellen. Die horizontale Lage und Orientierung der Bleche wird über eine Eichmessung bestimmt. Dazu sind Mittel vorhanden, um anhand der Markierungen die Lage und Orientierung jedes Blechs bezüglich des durch die horizontale und die rotative Bewegungsachse des Roboters definierten globalen xy-Koordinatensystems zu bestimmen.

Die Markierungen umfassen bevorzugt eine erste Markierung und zweite Markierungen. Die erste Markierung dient dazu, die Lage einer ersten Koordinatenachse des Blechs in Bezug auf die horizontale Bewegungsachse, d.h. die x-Achse, des Roboters zu messen, nämlich die x-Lage der lokalen y-Koordinatenachse. Die zweiten Markierungen dienen dazu, zwei Eichkörper lagegenau auf dem Blech zu positionieren, um die Lage und Orientierung einer zweiten Koordinatenachse des Blechs, nämlich der x-Koordinatenachse, in Bezug auf die horizontale Bewegungsachse und die rotative Bewegungsachse des Roboters auf einfache Weise messen zu können. Die erste Markierung und die zweiten Markierungen sind Ausnehmungen im Blech: Die erste Markierung ist beispielsweise ein ins Blech gestanzter Schlitz. Die zweiten Markierungen sind durch Stanzen oder Bohren im Blech angebrachte Bohrungen. Die erste Markierung könnte auch eine im Blech angebrachte Vertiefung sein.

Die vertikale Lage der Bleche ist durch das Profilgestell genügend genau bekannt, dass der Schwenkarm ohne vorgängige Justierung in den Zwischenraum zwischen dem Blech mit dem anzufahrenden Speicherplatz und dem darüber liegenden Blech hineingeschwenkt werden kann. Um Abrieb und damit die Erzeugung von Schmutz zu vermeiden, wird der Greifer beim Ablegen oder Holen eines Objekts in einem vorbestimmten Abstand oberhalb des Bodens des Blechs positioniert und dann die Klemmbacken geöffnet oder geschlossen. Da das Blech gegenüber der von der horizontalen und der rotativen Bewegungsachse aufgespannten xy-Ebene leicht geneigt sein kann, ist es erforderlich, auch die z-Höhe des Bodens des Blechs zu messen. Dazu ist am Greifer ein Distanzsensor angeordnet, der auf zwei Arten benutzt werden kann. Die erste Art besteht darin, in einem Kalibrierungsschritt die z-Höhe des Bodens des Blechs in mindestens drei, vorzugsweise allen vier Ecken des Blechs zu messen, so dass die z-Höhe jedes Speicherplatzes des Blechs berechnet werden kann. Die zweite Art besteht darin, den Abstandssensor jeweils beim Ergreifen oder Ablegen eines Objekts zu benutzen, um den Greifer im vorbestimmten Abstand über dem Blech zu positionieren.

Der Speicher eignet sich wie gesagt für die Lagerung von Formschalen in einer Fertigungslinie für die Herstellung von Linsen. Jede Formschale weist eine Kodierung auf, die ihre Eigenschaften beschreibt. Der Speicher wird wie folgt benutzt: Wenn eine neue Linse gemäss einem vorbestimmten Linsenrezept hergestellt werden soll, dann entnimmt der Roboter nacheinander zwei zum Linsenrezept passende Formschalen von den Blechen des Speichers und legt sie nacheinander auf einem Ausgabetisch bereit, wo sie von einem ändern Roboter der Fertigungslinie übernommen werden. Nach dem Durchlaufen der Fertigungslinie werden die Formschalen gereinigt. Der Speicher ist entweder für halbautomatischen oder vollautomatischen Betrieb konzipiert. Bei der halbautomatischen Version werden die gereinigten Formschalen von einem Operateur dem Speicher zugeführt. Dazu ist mindestens eine im Profilgestell gelagerte Schublade vorhanden, die eine vorbestimmte Anzahl von Speicherplätzen für die Aufnahme je einer Formschale aufweist. Wenn eine Schublade vom Operateur teilweise oder vollständig mit Formschalen belegt worden ist, schliesst der Operateur die Schublade. Dann wird die Schublade vom Steuerungssystem automatisch verriegelt und der Roboter entnimmt eine Formschale nach der anderen aus der Schublade und lässt ihre Kodierung vom Erkennungssystem ablesen. Wenn in der Datenbank der Fertigungslinie ein Datensatz mit der gelesenen Kodierung vorhanden ist, dann legt der Roboter die Formschale auf einem beliebigen freien Speicherplatz auf einem der Bleche ab. Der belegte Speicherplatz wird im Datensatz gespeichert. Wenn in der Datenbank kein Datensatz mit der gelesenen Kodierung existiert, dann platziert der Roboter die Formschale wieder auf einem Ablageplatz in der Schublade. Zudem wird eine Meldung erzeugt, die dies dem Operateur mitteilt. Die Anzahl der Schubladen beträgt vorzugsweise zwei, so dass der Operateur eine Schublade mit Formschalen beladen kann während der Roboter die andere Schublade abarbeitet. Die Beladung der Schublade erfolgt mit Vorteil so, dass die Speicherplätze in einer vorbestimmten Reihenfolge mit Formschalen belegt werden. Der Roboter arbeitet die Speicherplätze in dieser Reihenfolge ab, bis er einen leeren Speicherplatz vorfindet. Bei der vollautomatischen Version werden die Formschalen mittels eines Transportsystems, beispielsweise eines Förderbandes, zugeführt. Der Roboter entnimmt dann eine Formschale nach der anderen vom Transportsystem, lässt ihre Kodierung vom Erkennungssystem ablesen und legt sie, wenn die Kodierung bekannt ist, auf einem beliebigen freien Speicherplatz auf einem beliebigen Blech ab.

Der Speicher eignet sich sowohl für die Lagerung von Objekten, die eine Kodierung enthalten, als auch für die Lagerung von Objekten ohne Kodierung. Der Greifer ist der Art und der Beschaffenheit der Objekte angepasst und enthält beispielsweise die oben genannten Klemmbacken oder er ist als Saugorgan ausgebildet, um die Objekte mittels Vakuum halten zu können.

Ein Ausführungsbeispiel des erfindungsgemässen Speichers wird nachfolgend anhand der Zeichnung näher erläutert, wobei das Ausführungsbeispiel den Einsatz des Speichers in einer Fertigungslinie für die Herstellung von Linsen durch Giessen betrifft. Der Speicher lässt sich aber sinngemäss benutzen für die Lagerung anderer Objekte.

Es zeigen:
- Fig. 1: die Vorderseite eines erfindungsgemässen Speichers für Formschalen,
- Fig. 2: die Rückseite des Speichers,
- Fig. 3: einen vergrösserten Ausschnitt aus der Fig. 2,
- Fig. 4: ein Blech in Aufsicht, und
- Fig. 5: einen Profilrahmen des Blechs.

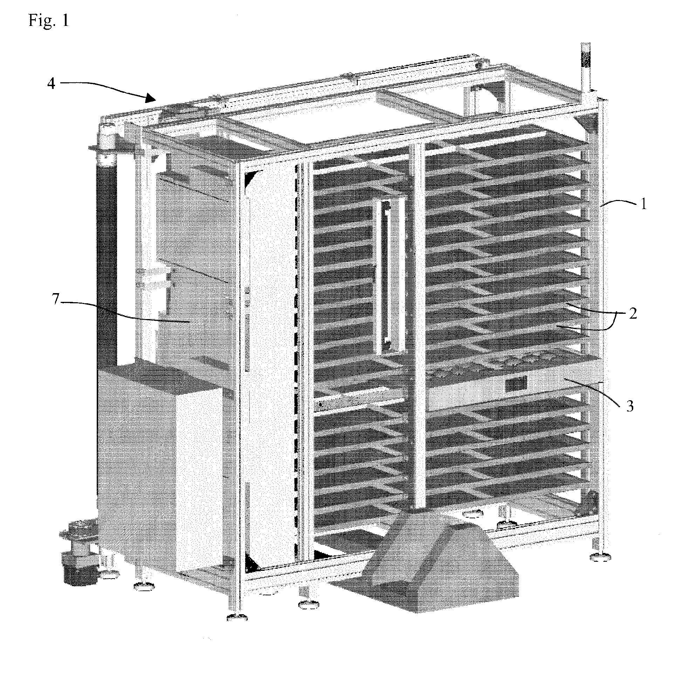

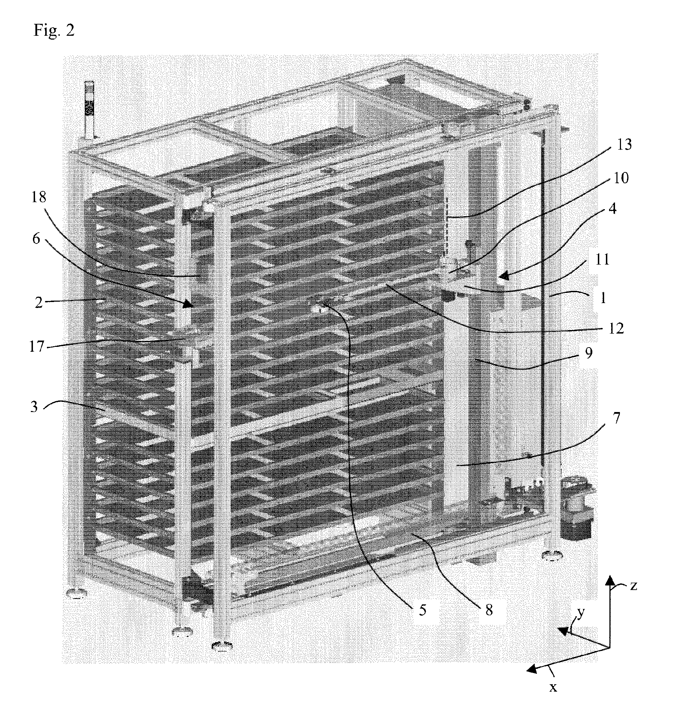

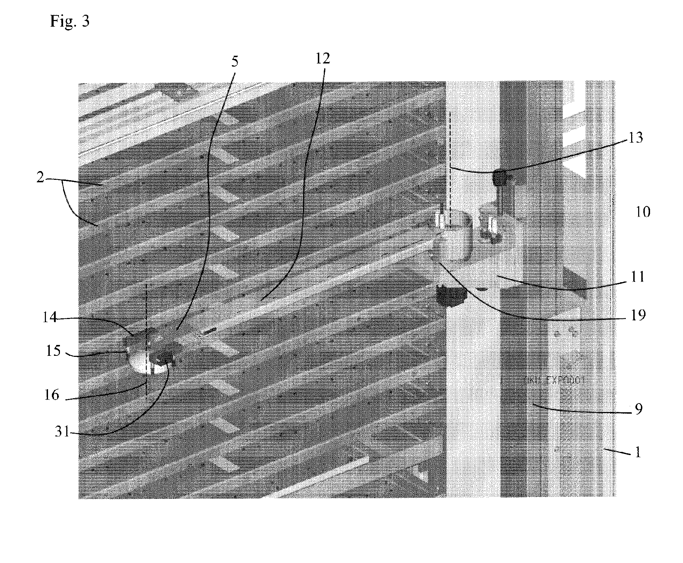

Die Fig. 1 zeigt in perspektivischer Darstellung die Vorderseite eines erfindungsgemässen Speichers für die Ablage von Formschalen, der für den halbautomatischen Betrieb konzipiert ist. Die Fig. 2 zeigt in perspektivischer Darstellung die Rückseite des Speichers. Die Fig. 3 zeigt einen Ausschnitt aus der Fig. 2 in vergrösserter Darstellung. Die Achsen eines kartesischen Koordinatensystems sind mit x, y und z bezeichnet, wobei x und y zwei horizontale Koordinatenachsen und z die vertikale Koordinatenachse bezeichnet Das Gehäuse des Speichers ist in den Figuren aus Gründen der zeichnerischen Klarheit weggelassen. In den Figuren sind nur die für das Verständnis der Erfindung nötigen Teile mit einem Bezugszeichen bezeichnet. Der Speicher umfasst ein auf Füssen aufgestelltes Profilgestell 1, mehrere Bleche 2, mindestens eine, vorzugsweise zwei Schubladen 3, einen Roboter 4 mit einem Greifer 5, ein Erkennungssystem 6 und, fakultativ, ein Filtersystem 7. Das Profilgestell 1 nimmt die Bleche 2 und Schubladen 3 auf. Die Bleche 2 enthalten eine Vielzahl von Speicherplätzen, wobei auf jedem Speicherplatz eine Formschale abgelegt werden kann. Die Bleche 2 sind übereinander angeordnet und beispielsweise mit Schrauben lösbar am Profilgestell 1 befestigt. Die Bleche 2 sind bevorzugt wie Schubladen in bekannter Weise auf Führungen gelagert, so dass sie im Servicefall vom Profilgestell 1 gelöst und wie eine Schublade herausgezogen werden können. Die Schubladen 3 weisen eine Vielzahl von Ablageplätzen für die Formschalen auf. Die Schubladen 3 dienen als Übergabestation vom Menschen zur Maschine für die Beladung des Speichers. Die Schubladen 3 sind mit einem Verriegelungsmechanismus ausgestattet, damit sie im eingeschobenen Zustand im Profilgestell 1 verriegelbar sind. Der Roboter 4 hat drei Freiheitsgrade, nämlich zwei translatorische Freiheitsgrade und einen rotativen Freiheitsgrad. Der Roboter 4 umfasst dementsprechend zwei lineare Bewegungsachsen 8 und 9 und eine rotative Bewegungsachse 10. Die linearen Bewegungsachsen 8 und 9 werden hier nicht näher erläutert, sie umfassen Führungen, einen Antrieb und einen Positionsgeber und ermöglichen die Bewegung einer Plattform 11 in x-Richtung bzw. in z-Richtung. Die rotative Bewegungsachse 10 ist realisiert mittels eines Schwenkarms 12, dessen eines Ende um eine parallel zur z-Achse verlaufende Drehachse 13 drehbar auf der Plattform 11 gelagert ist und an dessen anderem Ende sich der Greifer 5 befindet. Der Greifer 5 weist zwei beispielsweise pneumatisch betätigbare Klemmbacken 14 auf. Die Klemmbacken 14 sind bezüglich einer in vertikaler Richtung verlaufenden Greifachse 16 auslenkbar. Sie weisen je zwei in z-Richtung verlaufende, als Greiffinger dienende Bolzen 15 auf, mit denen der Greifer 5 eine Formschale ergreifen kann. Die Position des Roboters 4 ist durch drei Werte X_{R}, Z_{R} und θ_{R} charakterisiert, wobei X_{R} die x-Lage der Drehachse 13, der Drehwinkel θ_{R} den Winkel, den der Schwenkarm 12 mit der x-Achse einschliesst, und z_{R} die z-Höhe der Plattform 11 bezeichnen. Die Position des Greifers 5 ist durch die Lage seiner Greifachse 16 und die z-Höhe z_{G} des Endes der Bolzen 15 des Greifers 5 definiert. Die Lage der Greifachse 16 ergibt sich mit Hilfe der Trigonometrie aus den Werten x_{R}, θ_{R} und dem Abstand L zwischen der Drehachse 13 und der Greifachse 16. Die z-Höhe z_{G} ergibt sich aus dem Wert z_{R} und einem Offsetwert Δz. Das Erkennungssystem 6 besteht aus einem um eine vertikale Achse drehbaren Tisch 17 und einer optischen Lesevorrichtung 18 und dient dazu, die auf der Formschale angebrachte Kodierung zu lesen. Der Tisch 17 wird während des Erkennungsvorgangs um die vertikale Achse gedreht, so dass die am Rand der Formschale angebrachte Kodierung im Verlaufe der Drehung in den Lesebereich der Lesevorrichtung 18 gelangt. Der Speicher umfasst weiter Mittel, vorzugsweise in der Form eines einzigen, auf der Plattform 11 angeordneten Abstandssensors 19, um die Lage und Orientierung jedes Blechs 2 bezüglich eines auf die Bewegungsachsen 8, 9 und 10 des Roboters 4 bezogenen Koordinatensystems zu bestimmen, damit der Greifer 5 die Formschalen auf den Speicherplätzen ablegen oder von dort holen kann.

Die Schubladen 3 sind auf einer Vorderseite des Speichers in einer Höhe angeordnet, die es dem Operateur erlaubt, die dazu herausgezogene Schublade 3 bequem mit Formschalen zu füllen. Der Roboter 4 und das Erkennungssystem 6 sind auf der Rückseite des Speichers angeordnet. Das Filtersystem 7 ist seitlich neben den Blechen 2 angeordnet. Er wird mit Druckluft versorgt und lässt gefilterte Luft in die zwischen den Blechen 2 bestehenden Zwischenräume strömen. Im Innern des Gehäuses herrscht somit ein geringer Überdruck aus gereinigter Luft, der dafür sorgt, dass sich weder Staub noch anderer Schmutz auf den Formschalen ablagert.

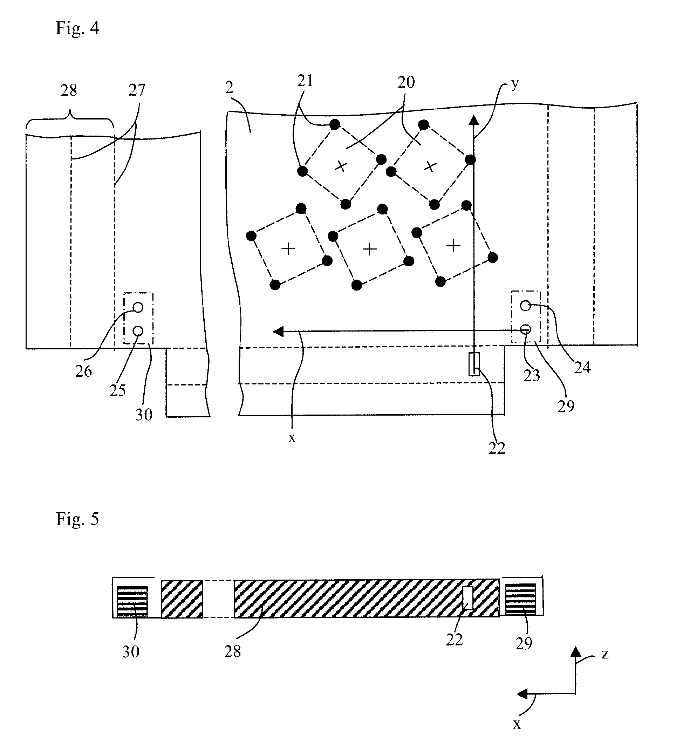

Die Konstruktion der Bleche 2 und deren Zusammenwirken mit dem Roboter 4 werden nun im Detail erläutert. Die Bleche 2 sind alle gleichartig, aber infolge unvermeidlicher Herstellungstoleranzen weichen die Positionen der Speicherplätze von ihrer theoretisch erwarteten Soll-Position ab. Die Struktur eines Blechs 2 wird anhand der Fig. 4 und 5 erläutert. Die Fig. 4 zeigt das Blech 2 in Aufsicht. Das Blech 2 enthält eine Anzahl n von Speicherplätzen 20. Jeder Speicherplatz ist definiert durch vier nach oben vorstehende, auf den Eckpunkten eines Quadrats angeordnete Noppen 21, obwohl theoretisch drei Noppen für die Definition eines Speicherplatzes ausreichen. Der Mittelpunkt des Quadrats des Speicherplatzes 20 mit der Nummer i hat die lokalen Koordinaten (x;, y;). Die Lage der Noppen 21 ist für jeden Speicherplatz so dem Roboter 4 angepasst, dass die Bolzen 15 des Greifers 5 und die Noppen 21 nicht miteinander in Berührung kommen. Dadurch werden Kollisionen zwischen den Bolzen 15 und den Noppen 21 vermieden. Das Blech 2 enthält verschiedene Markierungen 22 bis 26, die dazu dienen, die durch die lokalen Koordinaten (x;, y;) definierten Positionen der Speicherplätze auf Koordinaten der Greifachse des Greifers 5 des Roboters 4 umzurechnen. Die Herstellung einer Beziehung zwischen den lokalen Koordinaten des Blechs 2 und den Positionen der Bewegungsachsen 8, 9 und 10 bzw. der Greifachse 16 des Greifers 5 wird nun anhand eines bevorzugten Beispiels erläutert: Die Anzahl der Markierungen beträgt fünf und die fünf Markierungen sind unterteilt in eine erste Markierung 22 und zweite Markierungen 23 bis 26 am Rand des Blechs 2 angebracht. Das Blech 2 ist zunächst eine ebene Platte, in die die Markierungen 22 bis 26 und die Noppen 21 eingebracht werden. Die erste Markierung 22 (Fig. 5) ist ein in y-Richtung verlaufender Schlitz. Die zweiten Markierungen 23 bis 26 sind Bohrungen. Durch Abbiegen des Randes des Blechs 2 um vorbestimmte Biegelinien 27 erhält der Rand des Blechs 2 einen Profilrahmen 28, der dem Blech 2 eine gewisse Stabilität gibt. Um die mechanische Stabilität des Blechs 2 zu erhöhen, sind bevorzugt zusätzliche Profilschienen auf dem Blech 2 befestigt. Die erste Markierung 22 befindet sich nach dem Biegevorgang in einer sich in der xz-Ebene erstreckenden Seite des Profilrahmens 28. Beim Biegevorgang ändert sich die x-Koordinate der Markierung 22 nicht. Mittels durch die Markierungen 23 und 24 geführter Schrauben und/oder Stifte ist ein erster Eichkörper in Gestalt eines Würfel 29 auf dem Blech 2 befestigt. Mittels durch die Markierungen 25 und 26 geführter Schrauben und/oder Stifte ist ein zweiter Eichkörper in Gestalt eines Würfel 30 auf dem Blech 2 befestigt. Die dem Roboter 4 zugewandte xz-Seitenfläche der Würfel 29 und 30 dient als Eichfläche, deren y-Lage in Bezug auf das lokale Koordinatensystem des Blechs 2 durch die als Bohrungen ausgeführten zweiten Markierungen 23, 24 bzw. 25, 26 mit der erforderlichen Genauigkeit festgelegt ist. Die Fig. 5 zeigt in seitlicher Ansicht den Profilrahmen 28 mit der ersten Markierung 22 sowie den Eichflächen der beiden Würfel 29 und 30. Die Markierung 22 und die Markierung 23 definieren den Ursprung sowie die x-Achse und die y-Achse des lokalen Koordinatensystems des Blechs 2. Die erste Markierung 22 dient dazu, die x-Lage der y-Achse des lokalen Koordinatensystems in Bezug auf die horizontale Bewegungsachse 8 des Roboters 4 zu bestimmen. Die zweiten Markierungen 23 bis 26 dienen dazu, die Lage des Ursprungs und die Orientierung der x-Achse des lokalen Koordinatensystems in Bezug auf das von den Bewegungsachsen 8 und 10 des Roboters 4 aufgespannte Koordinatensystem zu bestimmen. Diese Bestimmung erfolgt im bevorzugten Beispiel mit dem Abstandssensor 19. Der Abstandssensor 19 ist vorzugsweise ein optisch oder induktiv arbeitender Sensor.

Die Bewegungsachsen 8, 9 und 10 des Roboters 4 definieren also ein globales kartesisches Koordinatensystem. Das Blech 2 befindet sich auf einer durch das Profilgestell 1 vorgegebenen z-Höhe. Die Lage des Blechs 2 in der xy-Ebene ist definiert durch ein globales Koordinatenpaar (x_{B}, y_{B}), das die Lage des Ursprungs des lokalen Koordinatensystems des Blechs 2 bezeichnet, und einen Winkel ϕ_{B}, den die lokale x-Achse des Blechs 2 mit der globalen x-Achse des Roboters 4 einschliesst. Diese Werte werden mittels einer Eichmessung wie folgt bestimmt:
- Die Plattform 11 wird auf eine z-Position gebracht, die so bestimmt ist, dass der Schwenkarm 12 in den Zwischenraum zwischen dem Blech 2 und dem darüber liegenden Blech eingeschwenkt werden kann.
- Die Plattform 11 wird in x-Richtung bewegt. Sobald der Abstandssensor 19 an der ersten Markierung 22 vorbeifährt, ändert sich sein Ausgangssignal markant. Aus dem Verlauf des Ausgangssignals wird diejenige x-Position x₀ des Roboters 4 bestimmt, bei der sich der Abstandssensor 19 gegenüber dem Zentrum der ersten Markierung 22 befindet. Der Wert x_{B} ergibt sich aus dem Wert x₀ und einem vorbestimmten Offsetwert Δx, der den Abstand des Abstandssensor 19 von der Drehachse 13 bezeichnet.
- Die Plattform 11 wird in x-Richtung an eine Position x₁ bewegt, bei der sich der Abstandssensor 19 gegenüber der Eichfläche des ersten Würfels 29 befindet, und mit dem Abstandssensor 19 die y-Position y_{w1} der Eichfläche des ersten Würfels 29 gemessen.
- Die Plattform 11 wird in x-Richtung an eine Position x₂ bewegt, bei der sich der Abstandssensor 19 gegenüber der Eichfläche des zweiten Würfels 30 befindet, und mit dem Abstandssensor 19 die y-Position y_{w2} der Eichfläche des zweiten Würfels 30 gemessen.
- Aus den Werten x₁, x₂, y_{w1} und y_{w2} werden die Werte y_{B} und ϕ_{B} berechnet.

Somit sind nun alle Parameter bestimmt, damit aus den Positionen x_{R} und θ_{R} des Roboters 4 die auf das Blech 2 bezogenen lokalen Koordinaten der Greifachse 16 des Greifers 5 berechnet werden können. Umgekehrt können die lokalen Koordinaten eines Speicherplatzes 20 in Werte x_{R} und θ_{R} umgerechnet werden, die angeben, welche Positionen die Bewegungsachsen 8 und 10 des Roboters 4 anfahren müssen, damit die Greifachse 16 des Greifers 5 das Zentrum des Speicherplatzes schneidet.

Am Greifer 5 ist ein zweiter Abstandssensor 31 (Fig. 3) befestigt, der benützt wird, um den Greifer 5 für das Ergreifen oder Ablegen einer Formschale so über dem Blech 2 zu positionieren, dass zwischen den Enden der Bolzen 15 und dem Blech 2 ein vorbestimmter Abstand A von typischerweise 0.1 bis 0.3 mm verbleibt. Der Abstandssensor 31 ist vorzugsweise ein Schalter, der schaltet, wenn eine vorbestimmte Schalthöhe über dem Boden des Blechs 2 erreicht ist.

Um eine Formschale auf einem Speicherplatz 20 des Blechs 2 abzulegen oder von einem Speicherplatz 20 des Blechs 2 zu entnehmen, fährt die Plattform 11 eine z-Höhe an, die so bestimmt ist, dass der Schwenkarm 12 in den Zwischenraum zwischen dem Blech 2 mit dem anzufahrenden Speicherplatz und dem darüberliegenden Blech hineingeschwenkt werden kann. Anschliessend wird der Schwenkarm 12 um die Drehachse 13 geschwenkt, so dass die Greifachse 16 des Greifers 5 das Zentrum des Speicherplatzes 20 schneidet. Dann wird die Plattform 11 abgesenkt, bis die Bolzen 15 die vorbestimmte Höhe über dem Blech 2 erreicht haben. Nun werden die Klemmbacken 14 entweder geöffnet, um die Formschale abzulegen, oder geschlossen, um die Formschale zu ergreifen. Eine der beiden Klemmbacken 14 ist um eine vertikale Achse drehbar gelagert. Beim Schliessen der Klemmbacken 14 passt sich die Drehlage dieser Greifbacke automatisch der Form der Formschale an und alle vier Bolzen 15 5 kommen in Kontakt mit der Formschale. Es hat sich gezeigt, dass vier Bolzen 15 notwendig sind, um die Formschale zuverlässig greifen zu können, weil die Formschalen meistens nicht exakt kreisförmig sind.

Die Steuerungssoftware sorgt dafür, dass der Roboter 4 einerseits die über die Schublade 3 zugeführten Formschalen nach und nach dem Erkennungssystem 6 zuführt und dann auf einem freien Speicherplatz auf einem der Bleche 2 platziert und dass der Roboter 4 andererseits die zwei für das Giessen einer Linse benötigten Formschalen nacheinander von ihrem Speicherplatz 20 holt und auf dem Ausgabetisch platziert, wo sie von einem anderen Roboter der Fertigungslinie übernommen werden. Diese beiden Prozesse können zeitlich verschachtelt ablaufen.

Der Speicher kann auf einfache Weise auf etwa die doppelte Kapazität vergrössert werden, in dem ein zweites Profilgestell mit Blechen gegenüber dem ersten Profilgestell 1 platziert wird, so dass sich der Roboter 4 zwischen den beiden Profilgestellen befindet.

Die wichtigsten Vorteile des erfindungsgemässen Speichers sind:
- Die Objekte können platzsparend abgelegt werden.
- Die bewegten Massen sind relativ gering.
- Die Konstruktion mit den Blechen ist kostengünstig.
- Abrieb und damit Schmutz werden vermieden.
- Der Roboter mit zwei linearen und einer rotativen Bewegungsachse hat einen grossen Arbeitsbereich und benötigt trotzdem wenig Platz.

## Patentansprüche

1. Speicher, umfassend
ein Profilgestell (1) mit mehreren Blechen (2), wobei jedes Blech (2) einen durch Biegen gebildeten Profilrahmen (28), eine Vielzahl von auf dem Boden angebrachten Noppen (21) sowie eine erste Markierung (22) und zweite Markierungen (23-26) und mittels der zweiten Markierungen auf dem Blech angeordnete Eichkörper aufweist, wobei die Noppen Speicherplätze (20) für die Aufnahme eines Objekts begrenzen, wobei die zweiten Markierungen (23-26) Ausnehmungen im Blech sind,
einen Roboter (4) mit einem Greifer (5), wobei der Roboter eine horizontale und eine vertikale lineare Bewegungsachse (8, 9) und eine rotative Bewegungsachse (10) aufweist, und
Mittel für die Bestimmung der Lage jedes Blechs in Bezug auf ein von der horizontalen und der rotativen Bewegungsachse des Roboters aufgespanntes Koordinatensystem, damit die auf das Blech bezogenen Koordinaten eines Speicherplatzes in Werte umgerechnet werden können, die angeben, welche Positionen die horizontale und die rotative Bewegungsachse des Roboters anfahren müssen, damit der Greifer ein Objekt auf dem Speicherplatz ablegen oder vom Speicherplatz entnehmen kann.

2. Speicher nach Anspruch 1, **dadurch gekennzeichnet, dass** die Mittel für die Bestimmung der Lage jedes Blechs einen an der Plattform (11) angebrachten Abstandssensor (19) umfassen, mit dem eine auf die horizontale Bewegungsachse bezogene Koordinate der ersten Markierung des Blechs und der Abstand der Eichkörper zur horizontalen Bewegungsachse messbar ist.

3. Speicher nach Anspruch 1 oder 2, **dadurch gekennzeichnet, dass** im Profilgestell mindestens eine Schublade (3) gelagert ist, die als Schnittstelle zwischen einem Operateur und dem Speicher für das Nachfüllen mit Objekten dient.

4. Speicher nach einem der Ansprüche 1 bis 3, weiter umfassend einen weiteren, am Greifer angebrachten Abstandssensor (31), mit dem der Abstand des Greifers vom Boden des Blechs messbar ist.

5. Speicher nach einem der Ansprüche 1 bis 4, **dadurch gekennzeichnet, dass** die Bleche herausziehbar im Profilgestell gelagert sind.

6. Speicher nach einem der Ansprüche 1 bis 5, weiter umfassend ein Erkennungssystem (6) für die Identifizierung der Objekte.

7. Speicher nach einem der Ansprüche 1 bis 6, **gekennzeichnet durch** ein Filtersystem (7) für die Versorgung des Speichers mit gefilterter Luft und Überdruck.
